# EUROPEAN PATENT SPECIFICATION

(11) **EP 1 805 569 B1**
(45) Date of publication and mention of the grant of the patent: **06.06.2012**
(21) Application number: 05808987.1
(22) Date of filing: 25.10.2005
(51) Int. Cl.: G05B 19/418, B23Q 39/04, B23Q 3/155

(54) **ROBOT CELL AND METHOD FOR CHANGING AND STORING ELEMENTS IN A ROBOT CELL**
ROBOTERZELLE UND VERFAHREN ZUM ÄNDERN UND SPEICHERN VON ELEMENTEN IN EINER ROBOTERZELLE
CELLULE DE ROBOT ET PROCEDE PERMETTANT DE CHANGER ET DE STOCKER DES ELEMENTS DANS UNE CELLULE DE ROBOT

(30) Priority: 25.10.2004 NL 1027332
(43) Date of publication of application: 11.07.2007
(73) Proprietor: De Meerpaal B.V., 3440 AK Woerden (NL)
(72) Inventor: DE KONING, Jacobus, NL-3466 NR WAARDER (NL)
(74) Representative: Hutter, Jacobus Johannes
(86) International application number: PCT/NL2005/050021
(87) International publication number: WO 2006/085744

(56) References cited:
- GB-A- 1 322 104
- US-A- 4 543 636
- US-A- 4 547 854
- US-A- 4 752 885
- US-A- 6 010 440
- US-A- 6 157 866
- US-E1- R E37 622
- MULLER S ET AL: "ROBOT HANDLING ON MACHINE TOOLS" 1 December 1988 (1988-12-01), INDUSTRIAL AND PRODUCTION ENGINEERING, CARL HANSER VERLAG. MUNCHEN, DE, PAGE(S) 72-74,77 , XP000007973 ISSN: 0343-334X page 72 - page 74 page 77
- HOTZ W: "HANDHABUNG MIT INDUSTRIEROBOTER FUEHRT ZU FLEXIBLER FERTIGUNGSZELLE" WERKSTATT UND BETRIEB, HANSER, MUNCHEN, DE, vol. 124, no. 8, 1 August 1991 (1991-08-01), pages 623-626, XP000243303 ISSN: 0043-2792
- SCHUTZ W ET AL: "MACHINING CENTRE FOR THE YEAR 2000" EUROPEAN PRODUCTION ENGINEERING, CARL HANSER GMBH, MUNCHEN, DE, vol. 17, no. 4, 1 December 1993 (1993-12-01), pages 17-18,21, XP000422142 ISSN: 0940-2470

## Description

The invention relates to a robot cell according to the preamble of claim 1. Such a robot cell is disclosed in US RE 37662 E.

In modern day industry there is an incresing degree of automation, inter alia by integrating product and/or tool changers in various types of processing machines. Such changers have a limited capacity and in the case of substantial changes in the processes to be carried out will have to be provided with additional or replacements products and/or tools from outside the machine with which they are associated. In most cases this an be performed automatically by a robot. For instance, robots are used to change products and tools in CNC processing machines. However, these robots are restricted to performing a few, repetitive operations. Stocking of the tool and product changers can be done from a magazine. The magazine and the robot then form a so-called robot cell. One disadvantage of such a robot cell is that the magazine has to be equipped depending on the machine, and often depending on the manufacturer as well, because the toot and product changers for different types of processing machines and from different manufacturers each have their own requirements and demands. As a consequence of this the life of the robot cell is linked to the life of the processing machines, for example CNC processing machines, whilst the intrinsic economic life of the robot cell is longer. Therefore, when replacing processing machines a new robot cell also has to be purchased, which is associated with appreciable additional costs.

US Patent US RE 37 622 describes a method and an installation for polishing wafers. The wafer polishing installation comprises a wafer input/output module and a wafer processing module. In The input/output module use is made of a loading robot. The loading robot removes wafers, which are supplied in input cassettes, one by one and places them on an alignment unit. After alignment, a gripper unit places the aligned wafer on a loading point presented at the input location of an index table. This index table will then rotate. The points on which the wafer has to be placed are fixed on the index table and are filled on the basis of availability at the input location.

US Patent US 6157 866 describes a system for automatic handling of material in a production environment, which is subdivided into separate production areas. Robots that are used in this system temporarily place a wafer at a fixed location.

In the article entitled "Robot handling on machine tools" by Müller et al., Industrial & Product Engineering 12 (1988) pp 72-74, 77, an automated system for making gearbox components is described, where use is made of four integrated robots, each of which is installed in a robot cell. Each robot cell is adapted to the specific task it performs.

US Patent US 4 543 636 describes a digitally controlled installation for arranging a tool magazine consisting of a magazine for storing a multiplicity of tools and a stock magazine. When a product to be processed is supplied, the requisite tools are supplied as input to a processor on the basis of a programme of operations to be carried out. This processor develops a tool change programme so that all tools that are needed for processing the product are stored in the magazine for storing a multiplicity of tools.

Finally, US Patent US-A 4 845 835 in the name of Erowa AG describes a robot cell that is capable of changing and storing tools and/or products in an effective manner.

The above installations are not equipped to provide a flexible response to process and/or product changes. Each element has a fixed location within the installation. A change of machines and/or products means a change of elements. In such a case the installation has to be adapted or replaced, which is associated with high costs. Because each user imposes specific requirements, almost every robot cell will furthermore be custom-made, which is associated with high production costs and installation costs.

The aim of the present invention is to provide a robot cell that does not have these disadvantages. Said aim is achieved with a robot cell as described above comprising the characterizing features of claim 1. A robot cell according to the present invention can be organised flexibly. This can be coupled to various types of processing machines, each of which require different elements, and is furthermore capable of adapting its organisation affectively in the case of a process or product change.

It must be understood that it is possible that several elements with the same unique property are stored in the robot cell. On the basis of this corresponding unique property, the robot cell will select a suitable location of the same type, if available, in the magazine section.

In one embodiment, the robot cell comprises a memory for the selection of a suitable location in the magazine section, which memory contains a first and a second database, and a first processor for comprising a suitable location for an element placed in the interchange station on the basis of data from the first and second database, wherein the first database contains data wich regard to the unique property of the element placed and the second database contains data with regard to whether or not locations in the magazine section are occupied, as well as the suitability per location for storing an element with a specific value for the unique property. By making use of these database, the processor can relatively easily select a suitable position for a new element to be placed.

The robot cell comprises a measurement device. As a result of the presence of this measurement device the robot cell is better able to function independently. The measurement device can rapidly supply the requisite data for effective by the robot cell.

In one embodiment, the element placed is provided with a data carrier and the robot cell has a reader that can read the data carrier. Such a combination of measures makes it possible to obtain a large amount of information rapidly with regard to the element to be placed. The reader is preferably installed on the robot. In this way the robot can easily process properties which, for example, are of importance when handling the element.

In the abovementioned embodiments, the element can be placed on or in a storage unit. This makes it possible to subdivide the robot cell into units easily, and thus increases the flexibility.

In one embodiment, the robot cell is furthermore provided with an element changer. This element changer makes it possible to replace elements that are broken or worn with the aid of the robot, without the storage unit, with any other elements thereon, having to be changed.

In all embodiments, the robot cell can furthermore be provided with a cleaning device. Such a cleaning device can help to prevent malfunctions in the robot cell and processing errors in the machines to a minimum by limiting contamination of the robot cell and the elements present therein.

The invention further relates to a combination of one or more industrial machines and a robot cell according to the present invention. The one or more industrial machines can be CNC processing machines.

The invention furthermore relates to a method for changing and storing elements with a unique property in a robot cell, which comprises a robot, around at least part of which a wall has been installed, which is provided with an interchange station and which on the inside has a magazine section with at least two locations, wherein the at least two locations in the magazine section are each suitable for storing elements with a different value for the unique property, the method comprising:
- placing an element in the interchange station of the robot cell;
- detecting the unique property of the element;
- storing the detected unique property in a first database;
- selecting a suitable location for the element with the aid of a processor on the basis of the unique property detected, which is stored in the first database, and data relating to whether or not locations in the magazine section are occupied, as well as the suitability per location for storing an element with a specific value for the unique property, stored in a second database;
- placing the element in the location in the magazine section determined with the aid of the processor;
- storing the location provided with the element as well as changes, caused by placement, in the suitability per location for storing an element with a specific value of the unique property in the second database.

Such a method is disclosed as well in US RE 37662 E.

According to the invention, the method is characterised by detection which is effected by means of measuring a height of the element with the aid of a measurement device.

Detection can be effected by means of reading a data carrier that is affixed to the element to be placed by means of a reader.

In one embodiment if two or more locations are equally suitable the processor selects a lowest location. In this way a structured organisation of the robot cell can be achieved.

The property is a height and, if the height exceeds a predetermined threshold value, if two or more locations are equally suitable the processor selects a highest location. In this way high elements can be placed in the robot cell without taking up an exceptional amount of space, for example if there is no roof construction.

In the above mentioned embodiments of the method, the element can be placed on or in a storage unit. This makes it possible to subdivide the robot cell into units easily and thus increases the flexibility.

In the above mentioned embodiment the method can comprise defragmentation of the robot cell with the aid of the processor to create new locations. By combining gaps between successive stored elements, which gaps are in themselves too small to accommodate an element, one or more new locations can be created.

The invention will be further explained below by way of example on the basis of the following figures. The figures are not intended to restrict the scope of the invention, but merely to illustrate the latter. In the figures:
FIGURE 1 shows a plan view of a combination of an automated robot cell corresponding to one embodiment of the present invention and a number of CNC processing machines;
FIGURE 2 shows a side view of a combination of an automated robot cell corresponding to one embodiment of the present invention;
FIGURES 3a-b show a side view and a plan view, respectively, of a storage unit provided with tools;
FIGURES 4a-b show a side view and a plan view, respectively, of a storage unit provided with a product holder with products;
FIGURE 5 shows a side view of an interior of an automated robot cell corresponding to one embodiment of the present invention;
FIGURE 6 shows a block diagram, which shows, diagrammatically, the mutual relationships between important components in one embodiment of the present invention.
FIGURE 7 shows a functional block diagram which describes a method corresponding to one embodiment of the invention for organising an automated robot cell;

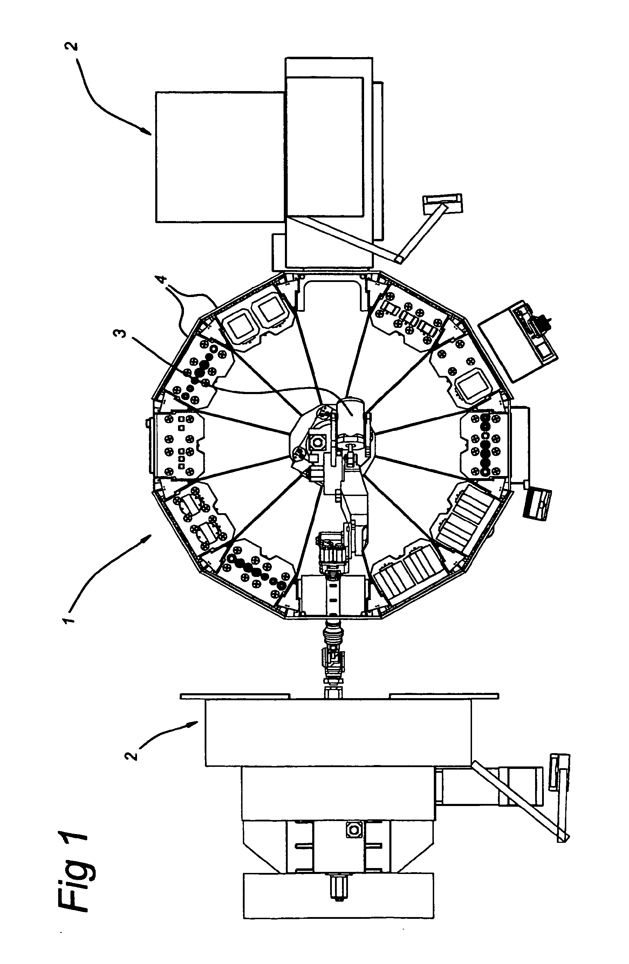

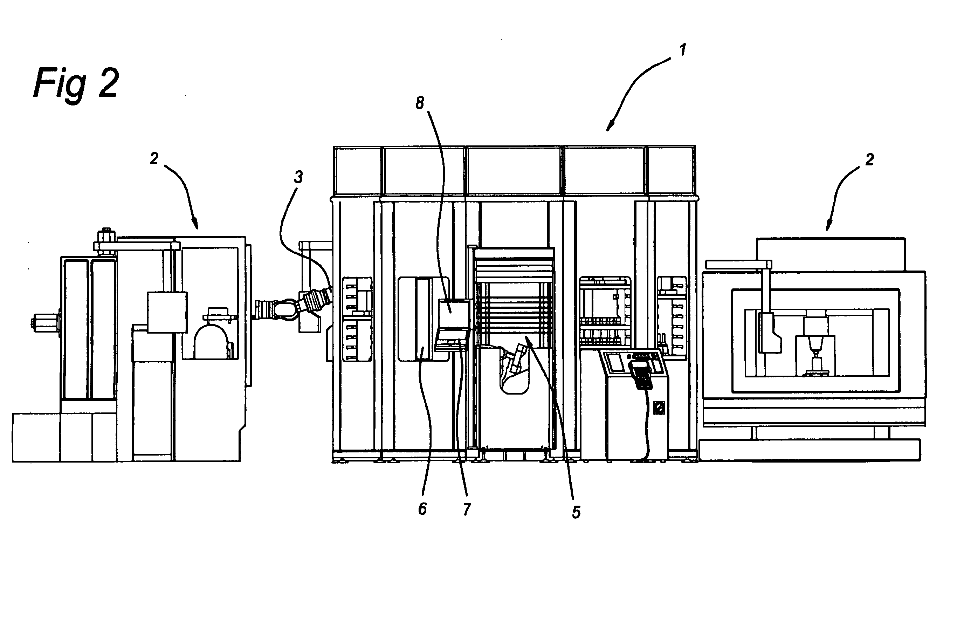

Figure 1 shows a plan view of a combination of an automated robot cell 1 corresponding to one embodiment of the present invention and a number of CNC processing machines 2 associated therewith. A side view of such a robot cell 1 is shown in Figure 2. It must be understood that the number of associated machines 2 is not restricted to two, as shown in Figures 1 and 2, but can also be a different number. It is also possible that apart from CNC processing machines 2 other machines which require regular replacement of tools and/or products can also be associated with the automated robot cell 1.

The robot cell 1 comprises a robot 3 and a number of magazine sections 4, which can be installed around the robot 3 such that a polygonal wall structure is obtained. The robot 3 is preferably a 4- or 6-joint robot, such as, for example, described in the abovementioned US Patent US-A 4 845 835 in the name of Erowa.

The magazine sections 4 can be provided with folding means which ensure that a magazine section 4 is able partially or entirely to fold, preferably outwards, in order to provide direct linking between a machine 2 to be served and the robot cell 1 and to facilitate the exchange of elements.

The arrangement of magazines in the robot cell 1 can therefore be partly dependent on the number of machines 2 that have to be served, the positioning of these machines with respect to the robot cell **1** and the surface area of a magazine section 4 that is used to provide direct transfer of elements between machine 2 and robot cell **1**, per coupled machine 2.

The robot cell 1 furthermore has an interchange station 5 and an element changer 6.

Each magazine section 4 has a number of locations, in this case distributed over the height, where storage units, provided with elements such as products to be processed or tools, can be placed. The storage units can be transported via the interchange station 5 into and out of the robot cell **1**. Changing of tools and optionally also products can, in addition, also be effected via the element changer 6. The storage units and/or elements that are to be newly placed or to be changed can be placed in the interchange station **5** from the outside either manually by an operator or automatically with the aid of a robot.

The robot cell **1** has a computer that is preferably connected to an input panel 7 and a display 8. An operator can enter commands, such as entering new data with regard to the tasks that the machines 2 have to carry out, via the input panel 7. The display 8 can display various data, such as the status of the contents of the robot cell 1, the progress of the processes that are carried out by the robot cell 1 and any process conditions, such as temperature and pressure. The computer can be so equipped that it controls not only the robot cell 1 but also machines 2 that are served by the robot cell 1. However, it is also possible that the machines 2 function independently that is to say stand-alone.

The robot cell 1 can furthermore be provided with a mesurement device for measuring height. Preferably, the measurement device is positioned in the opening of the interchange station 5, but such a device can also be accommodated in other locations, for example inside the robot cell 1.

The robot cell 1 according to the present invention furthermore has a processor and at least one memory. These can be installed in the computer 4, which is connected to the input panel 7 and the display 8, but can also be installed in another computer that is linked to computer 4. On the basis of data from the at least one memory, the processor selects a location where a storage unit with load, that is to say provided with one or more elements to be newly placed or to be changed, can be placed. These data comprise data with regard to the height of individual elements that have been placed thereon and to be newly placed or to be changed, as well as data with regard to the available locations within the robot cell 1.

The data with regard to the identity of the load that has been placed on the storage unit can be entered manually by an operator or in some other way from outside into the memory of the computer 4 of the robot cell 1. The data with regard to the height of the storage unit with load to be newly placed or to be changed can be entered in an identical manner, but are preferably obtained via the measurement device.

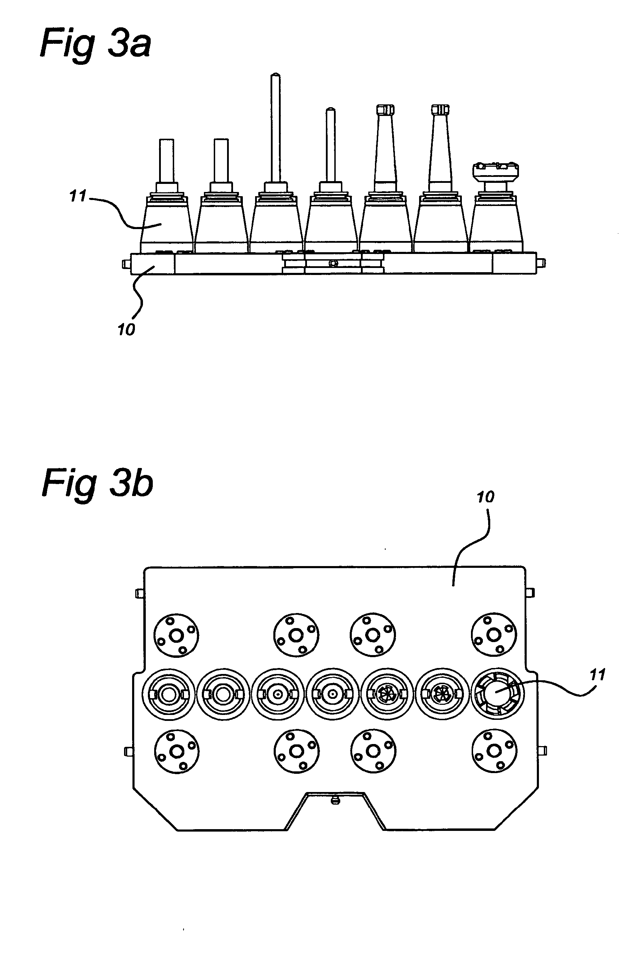

Figures 3a-b show a side view and a plan view, respectively, of one example of a storage unit 10 provided with tolls 11. The storage unit 10 is shaped such that this can be placed in various positions in a magazine section 4. A magazine section 4 can contain one or several storage units 10. The precise number is dependent on the number of locations per magazine section 4 and the height, of each storage unit 10 with load.

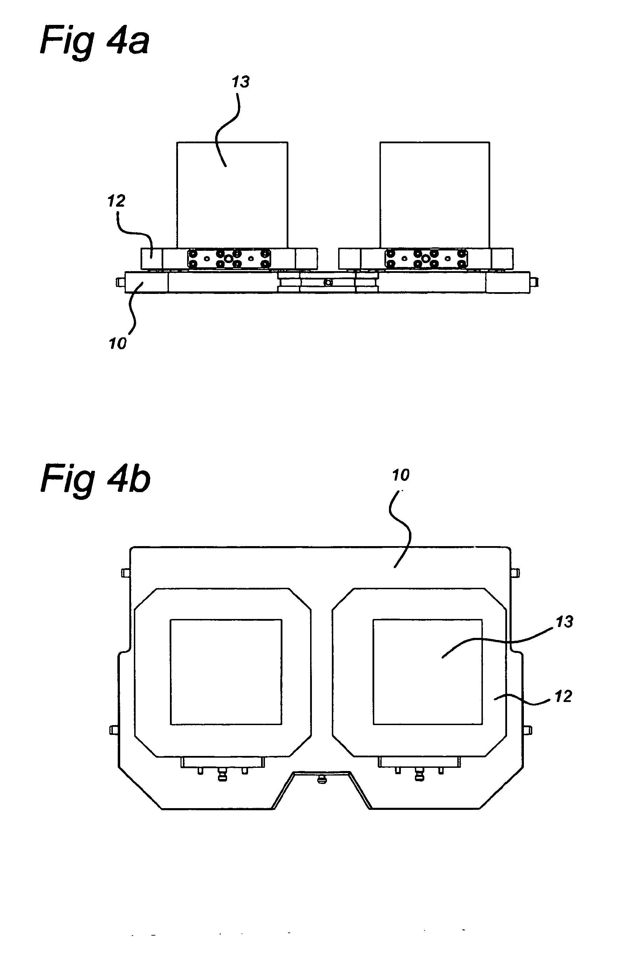

Figures 4a-b show a side view and a plan view, respectively, of one example of a storage unit 10 provided with a product holder 12 with products 13 on top of it. The products 13 can be either already processed or unprocessed.

Apart from the product holder 12, products 13 and tools shown in Figures 3a-b and 4a-b, the storage unit 10 can be also carry yet other elements as load. It is, or example, possible that a storage unit 10 carries gripper units, such as so-called grippers. Each gripper unit is suitable for picking up and handling a specific type of tool and/or product. Before moving an individual element, the robot 3 can now pick up a suitable gripper unit in order to perform this operation. Furthermore, the tools 11 can be placed in a separate tool holder, which, like the product holder 12 is placed on the storage unit 10.

The majority of components to be placed, that is to say both each storage unit 10 and elements, such as product holders 12, gripper units, tool holders and/or tools 11, placed thereon are preferably provided with a data carrier. Products 13 could also be provided with a data carrier. However, the fact that the products **13** are subjected to one or more treatments, where there is the risk that the data carrier could be damaged or destroyed, reduces the added value of such a data carrier.

A data carrier contains data relating to the height of an element and in the case of the storage unit 10 in Figures 3a-c indicate that there are 7 positions available for tools 11. Preferably, the data carrier also contains data with regard to the identity of the element. For instance, the data carrier on a tool 11 can indicate that it is fixed to a drill T1. Examples of data carriers are chips, such as, for example, radio frequency identification (RFID) chips, and self-adhesive labels provided with a suitable (bar)code.

In the case of the presence of data carriers on the components, the robot cell 1 is preferably provided with a reader, which is preferably installed on the robot 3. Before picking up the storage unit 10 for storage in the robot cell **1**, the robot 10 can detect the positions in which the individual elements that have been placed on the storage unit 10 are located.

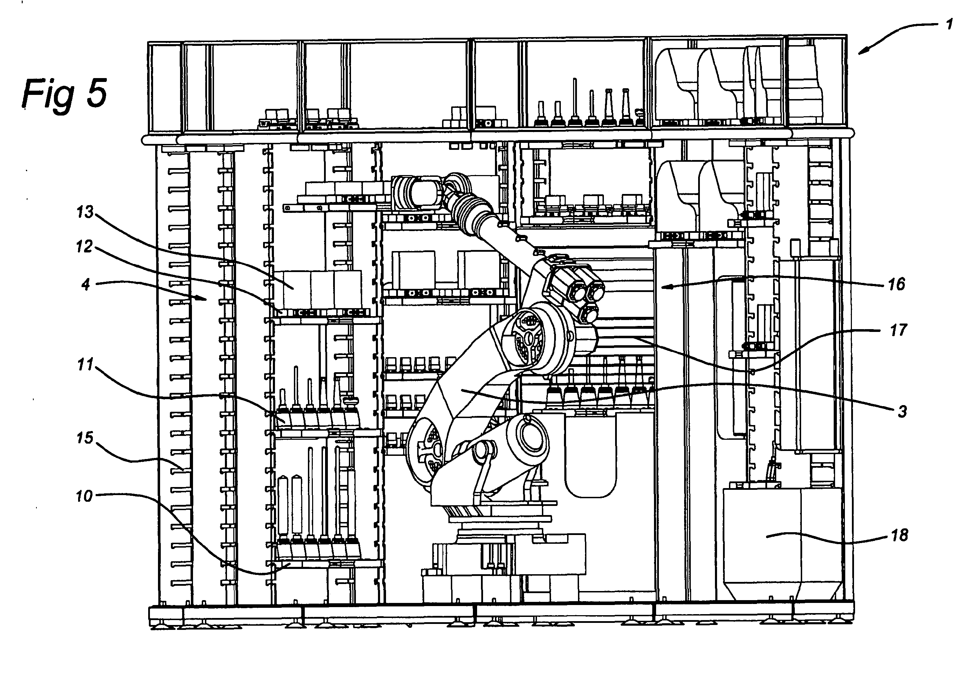

Figure 5 shows a side view of an interior of an automated robot cell **1** corresponding to one embodiment of the present invention. The interior shown shows a number of magazine sections 4 in which a number of storage units 10 have been placed. The number of storage units 10 per magazine section 4 is partly dependent on the available space and the height of the load per storage unit 10. Some storage units 10 are provided with product holders 12 with products **13**, whilst others carry a load of tools **11**. In this embodiment the number of locations where a storage unit 10 can be placed, if sufficient space is available, is determined by two series of slots 15 located horizontally opposite one another and positioned vertically above one another. A storage unit 10 can be pushed into each pair of slots 15 located horizontally opposite one another if the height of the combination of storage unit 10 and load permits this. It is, of course, also possible to use other constructions to obtain a number of locations, for example by arranging removable/foldable support elements, on which a storage unit 10 can be placed, above one another.

If the elements are not provided with a data carrier or if the data carriers contain no or too little information relating to their height, this can be obtained by making use of the measurement device. One example of such height measurement device 16 is shown in Figure 5. The height measurement device 16 is installed in the interchange station 5, but it is also possible to install this measurement device in another location, for example un a fixed location in a magazine section 4. The measurement device measures a height of storage units10 to be newly placed inside the robot cell 1 and/or for which the load is to be changed.

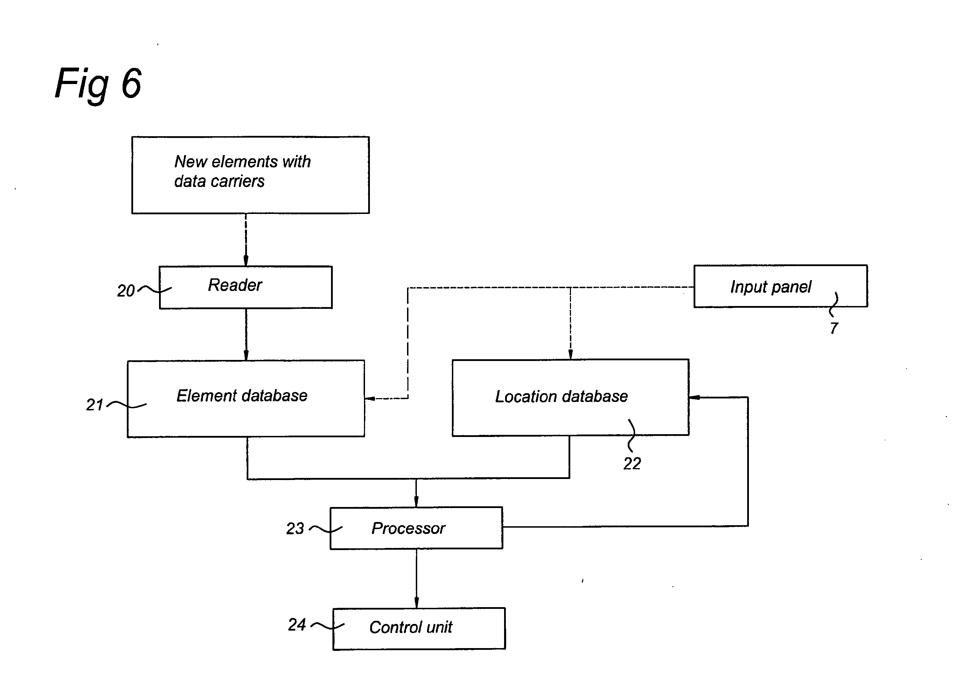

In Figure 6, one embodiment of a measurement device is shown that is capable of determining the height of the storage unit 10 including load. In order to achieve this, the height measurement device 16 contains a multiplicity of lasers position above one another (not shown), each of which emits a horizontal laser beam 17. Each laser beam 17 impinges on a sensor (not shown) positioned opposite the laser concerned. The distance between each pair of laser beams 17 located above one another is preferably less than or equal to the distance between the locations located vertically above one another in each magazine section 4. If a storage unit 10 with load is placed in the height measurement device 16, a number of laser beams 17 are interrupted. The interruption of the laser beams 17 is recorded by the corresponding sensors. With the aid of a processor (not shown), the height of the storage unit 10 with load is determined on the basis of signals that are received from the multiplicity of sensors. The height that this height measurement device 16 measures differs from the true height. After all, the true height of the measured storage unit 10 with load can be measured only with a precision that is limited by the distance between successive laser beams 17. If the height measurement device 16 determines the height on the basis of the lowest horizontal laser beam 17 that still reaches the opposite sensor, the height measurement device 16 then measures an upper limit. If the height measurement device 16 uses the highest horizontal laser beam 17 that does not reach the opposite sensor as the measured height, the measured height is then a lower limit. The processor, which determines the height ultimately to be registered, takes account of these two embodiments. This processor can be the same processor as the processor that selects the suitable locations for storage units 10 with load that are to be newly placed, but can also be a different processor, for example a processor that is integrated in the height measurement device 16. Those skilled in the art will understand that apart from the height measurement device 16 shown here other height measurement devices can also be used, including height measurement devices with a better resolution.

Furthermore, the robot cell 1 is preferably provided with a cleaning device 18. Contamination is a major problem in an industrial environment. If it is desired to guarantee the desired accuracies both with regard to positioning in the robot cell 1 and with regard to processing in the machines 2, it is then important that the products to be processed and processed products, as well as the tools 11 used, are adequately cleaned. Contamination of these elements can lead, inter alia, to malfunctions in the robot cell 1 and processing errors in the machines 2.

The cleaning device 18 is arranged in the robot cell **1** such that the robot 3 is able to bring the elements, which, for example, are used or are processed by the machines 2, into contact with it before they are stored. This can take place, inter alia, by allowing the elements to remain in the cleaning device 18 for some time or by moving the elements one or more times through the cleaning device 18 with the aid of a movement executed by the robot 3. In Figure 5 the cleaning device 18 comprises a tray that has been filled with a cleaning fluid. However, it is also possible to use a different type of cleaning device 18. The cleaning device 18 can preferably be moved by the mbot 3 and can be placed in a suitable location in a suitable magazine section 4, preferably in a manner identical to that for a storage unit 10. A cleaning device 18, as shown in Figure 5, has the advantage that complex rinsing and/or pumping systems are not needed. Preferably, the tray is placed below an opening to the machine 2, so that, in the course of the movement from a machine 2 to the robot cell 1, any contamination falling from the element moved can be collected immediately.

Figure 6 shows a block diagram that represents, diagrammatically, the mutual relationships between important components in one embodiment of the present invention. In the embodiment shown the storage unit 10 and the one or more elements are as far as possible provided with a data carrier. In this case tho robot cell 1 has a reader 20. Furthermore, the at least one memory of the robot cell 1 has at least two databases, an element database 21 and a location database 22. The element database 21 contains data with regard to one or more height properties of elements, such as tools 11, and can also contain data with regard their identity. In the location database 22 there is preferably an indication for each location within the robot cell 1 as to whether this is occupied or unoccuppied, as well as an indication of the suitability per location for storing and/or changing an element with a specific value of the height.

On entry to the robot cell 1 via the interchange station 5 the data carriers affixed to new elements can be read by the reader 20. The data read are then stored in an element database 21. Which elements together form a group is preferably also stored. If necessary, data can be entered via an input station, for example the input panel **7** of the computer, in both the location database 22 and in the element database 21. With the aid of the data from the two files 21, 22, a processor 23 then selects a suitable location where the group of new elements can be placed. Depending on the height data from element databasa 21 related to a height of the combination of storage unit 10 and one or more elements 11, 12, 13, the processor can search in the location database 22 for locations where a combination with that height can be placed. The selected location is then sent by the processor 23 to the control unit 24 of the robot 3. Finally, the control unit 24 ensures that the robot **3** is moved the new group of the elements from the position in the interchange station 5 to the location selected by the processor 23. Placing of the now group of elements can have consequences for surrounding locations that have not yet been filled, with regard to their suitability for storing and/or changing of an element with a specific value for the height properties. Any changes in said suitability per location that are produced by placing are therefore entered in the location database 22 by the processor 23 after placing.

A similar procedure takes place if a processing machine 2 requires an element for a process to be carried out. Suppose, for example, that a machine requires a drill T₁ and the computer requests that this be picked up from the correct magazine section. Suppose that drill T₁ is provided with a chip C₁₀₀ and is positioned on a storage unit 10 that is provided with a chip C₁. In a manner as described above, the processor 23 of the computer of the robot cell 1 has selected a suitable location for this storage unit 10 with drill T₁ and the robot 3 has placed the storage unit 10 concerned in the selected location. The correlation between location as stored in the second database 22 and the data as read by a read unit 20 from the chips C₁ and C₁₀₀ and stored in the first database 21 is also known.

When the computer of the robot cell 1 receives the request from the machine 2 for drill T₁, the processor 23 makes use of the above known data and correlations. After all, it is known that there is a T₁ in the robot cell 1 that has been positioned on specific a storage unit 10. The position of the element on the storage unit 10 concerned is possibly also recorded. The location of this specific storage unit 10 in the robot cell 1 is also known.

The processor 23 of the computer gives the control unit 24 of the robot 3 the command to pick up the drill T₁ concerned, or the relevant storage unit 10 on which the drill T₁ is located, and to provide this, for example via the interchange station 5, or if there are folding means, via the opening produced between robot cell 1 and machine 2 when these are folded out, to the requesting machine 2. The robot cell 1 preferably functions not so much as an implementer of commands an the basis of requests received from machines 2, but rather as an independent distributor of elements to associated machines 2 on the basis of process commands which it gives itself and which are entered in the computer of the robot cell 1 via the input panel or in some other way. There is then a so-called master-slave relationship between the robot cell 1 and the machine(s) 2. In this case the robot cell 1 (master) assigns the process commands to be carried out to specific machines 2 (slaves) and preferably assigns a specific priority to each process command. A machine 2 that is carrying out a process command with a higher priority then receives preferential treatment compared with a machine 2 that is carrying out a process with a lower priority, with regard to stocking with elements from the robot cell 1 that are needed for the process to be carried out. Both techniques that can be used to set up a master-slave relationship between robot cell 1 and machine(s) 2 and techniques for processing parallel commands of different priority are known to those skilled in the art.

In addition to the changing or placing of storage units 10 with load via the interchange station 5, in one embodiment of the invention it is also possible to change individual elements via an element changer 6, as shown in Figure 2. Tools 11 and/or products 13, which have to be replaced, either because they are superfluous or because they are worn or broken, can be placed in such an element changer 6 by the robot 3. An operator or robot outside the robot cell 1 can remove the element to be replaced that has been placed in the element changer 6 either manually or automatically. They are also able to place a new, replacement element in the element changer 6. Preferably, the element to be replaced is removed completely from the robot cell 1 before a replacement element is placed in the element changer 6.

If the majority of elements, that is to say product holders 12, tool holders, gripper units and tools 11 are provided with data carriers, the element changer 6 is preferably also provided with a reader 20. The reader 20 can read the data carrier and send it to a spare element database (not shown), which is also connected to processor 23. The processor 23 now compares the data read from the spare element database for the element to be newly placed with the data from element file 21 for the element to be replaced. If no differences are found, or if the differences remain below predetermined threshold values, the processor issues the command to place the element in the location selected by the processor 23 to the control unit 24 of the robot cell 1. The control unit 24 will in the majority of cases make the robot 3 place the new element in the location of the element that has been removed. If the differences found are too great and the new element thus has one or more properties which render positioning in the location of the element that has been removed impossible, the robot 3 will not place the element immediately. There are a number of possibilities in this case. By making use of the stored data per element in the element database 21 and the data in the location database 22 with regard to the location in which these elements were placed, the processor 23 can assign an alternative location for the element to be newly placed. In some cases it is also possible that the processor 29 indicates that the robot 3 has to change storage unit 10 for a number of elements, such as tools 11, within the robot cell. However, it is also possible that the processor 23 sends an error signal to, for example, the display 8 or to another component of the robot cell 1 using a signal function, for example a special signal lamp. The error can be reported by means of one or more signal types, such as error messages, audio signals or light signals.

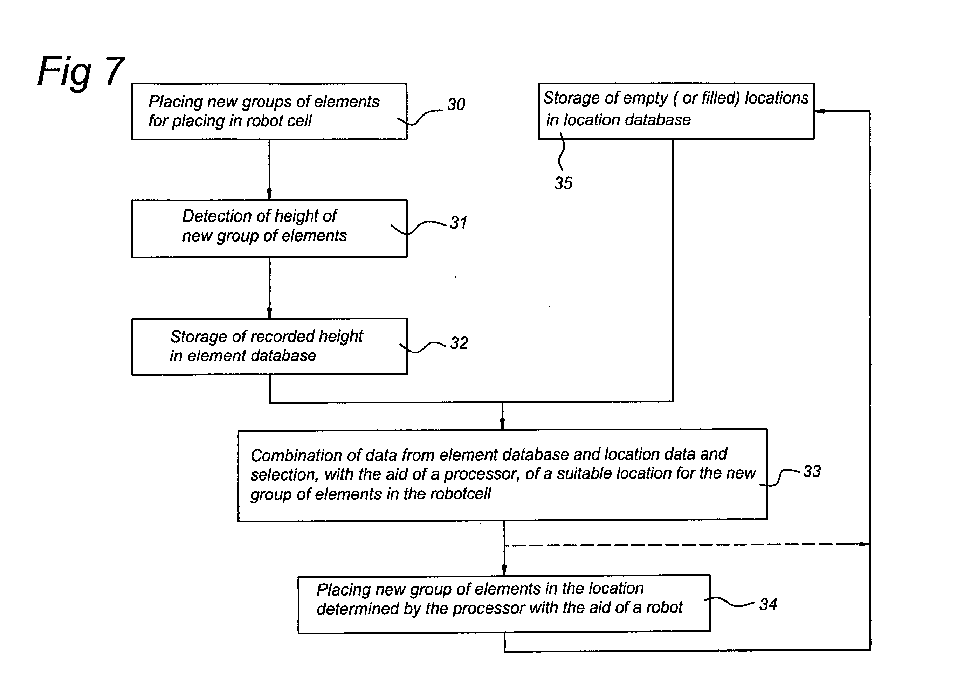

Figure 7 shows a functional block diagram that describes a method according to one embodiment of the invention for organising an automated robot cell. In a first step, step 30, a new group of elements, for example a storage unit 10 provided with a load, such as a product holder 12 with one or more products 13 or a tool holder with one or more tools 11, is placed in the opening of the robot cell 1, for example, interchange station 5. This can be done by an operator, but also automatically with the aid of a robot. With the aid of a detection device, for example a reader 20 in the case where the storage unit 10 and/or the majority of elements present thereon are provided with a data carrier or a measurement device if there are insufficient data carriers, the height of the new group of elements is then detected in step 31, that is to say read or measured, and, in step 32, stored in an element database 21.

A height measurement device 16 is shown in Figure 5. In another embodiment the robot cell 1 has a reader 20 for reading data carriers, for example RFID chips, which are affixed to each element and contain, inter alia, data on the height of the element concerned.

The robot cell 1 furthermore also contains a location database 22. The locations in the robot cell 1 that are empty and those that are filled are maintained in the location database 22. At the start all locations are unoccupied. The data stored in the location database 22 thus indicate that all locations are available. Preferably, the location database 22 maintains which locations are occupied.

To enable the robot 3 to place the group of new elements in the correct location within the robot cell 1, in step 33 the data from the element database 21 and the location database 22 are combined and fed to a processor 23. On the basis of the height of the new group of elements, and on the basis of the available space in the robot cell 1, this processor 23 selects a suitable location within a magazine section 4 and sends this to the control unit 24 of the robot 3. The at least one property detected can be determined immediately via a measurement device 16, but can also be computed by the processor 23 on the basis of data entered externally or individual data stored on a data carrier and read by a reader 20. In step 34 the robot 3 then places the group of new elements concerned in the location determined by the processor 23. Finally, the selected location for the new group of elements is sent either after step 33 by the processor 23 or after step 34 by the control unit 24 to the location database 22. In step 35 the newly filled location is then stored in the location database 22. Figure 8 is based on a determination of the height of a storage unit 10, optionally provided with a load.

The element database 21 can be designed in various ways. If a measurement device 16 is used, as shown in Figure 5, for performing a height measurement, the measured height will preferably be associated with the combination of new elements stored. In the case of reading data carriers using a reader 20, the heights read can also be associated per element. In this latter case which element belongs to a group of elements is also stored.

Apart from the abovementioned properties, there are yet further circumstances with which the processor 23 can take account when determining a location. For instance, it is preferable to fill an empty magazine section 4 from bottom to top. In this case a storage unit 10 to be newly placed in an empty magazine section 4 is assigned a location at the bottom of the magazine section 4. It can also be determined that if the combination of storage unit 10 and load is higher than a predetermined height, the combination to be newly placed is preferably placed at the top of the at least one magazine section 4. In this way, especially if there is no roof construction, high elements can be placed in the robot cell without taking up an excepitionally large amount of space. It is possible that as a result of unfavourable input/output of elements such as tools 11, product holders 12 and/or products 13 small gaps remain between the storage units 10 and their loads, between which gaps locations are produced that are too small to accomodate an element. In order to minimise this effect, it is possible, especially if all locations to be filled in the robot cell 1 are occupied, or if this is almost the case, to set up the processor 23 to re-rank the locations in the magazine section such that all combinations of storage unit 10 and load once again adjoin one another. In other words, the processor 23 can be set up to defragment the robot cell 1. As a result, by combining open spaces that in themselves are too small to accommodate a storage unit 10 including load, one or more new locations can again be created.

The above figures portray one embodiment of the automated robot cell according to the invention, where the robot cell is associated with one or more CNC processing machines. It must be understood that it is also possible to associate the robot cell 1 with other types of machine, the same sorts of measures as described above being needed.

The above description describes only a number of possible embodiments of the present invention. It is easy to see that many alternative embodiments of the invention can be conceived, all of which fall under the scope of the invention. This is defined by the following claims.

## Claims

1. Robot cell (1) for changing and storing elements with a unique property, such as tools (11) and/or products (13), comprising:
- a robot (3) suitable for picking up and moving elements (11, 12, 13) from outside the robot cell (1) to inside the robot cell (1) and vice versa;
- a wall, at least partially installed around the robot (3), which contains an interchange station (5) to enable the movement of elements (11, 12, 13) that have to be changed or stored from outside to inside and from inside to outside the robot cell (1) using the robot (3);
- a magazine section (4) on the inside of the wall, which has at least two locations;
- a control unit (24) for controlling the robot (3);
wherein the at least two locations in the magazine section (4) are each suitable for storing elements (11, 12, 13) with a different value for the unique property and the robot cell (1) is set up to select a suitable location in the magazine section (4) when an element (11, 12, 13) with a unique property is placed in the interchange station (5), **characterised in that** the robot cell (1) furthermore comprises a measurement device for measuring the unique property of the element (11, 12, 13) placed, and **in that** the measurement device comprises a height measurement device (16) for measuring a height of the element (11, 12, 13) placed.

2. Robot cell according to Claim 1, wherein the robot cell (1) comprises a memory for the selection of a suitable location in the magazine section (4), which memory contains a first and a second database (21, 22), and a first processor (23) for computing a suitable location for an element (11, 12, 13) placed in the interchange station (5) on the basis of data from the first and second database (21, 22), wherein the first database (21) contains data with regard to the unique property of the element (11, 12, 13) placed and the second database (22) contains data with regard to whether or not locations in the section (4) are occupied, as well the suitability per location for storing an element with a specific value for the unique property.

3. Robot cell according to Claim 1 or 2, wherein the height measurement device (16) comprises:
- a multiplicity of lasers positioned above one another, each of which emits an essentially horizontal laser beam (17);
- a multiplicity of sensors, each sensor corresponding to one laser, which receives the relevant laser beam (17) emitted;
- a second processor, that is connected to the multiplicity of sensors, for determining the height of the element (11,12,13) placed on the basis of signals from the multiplicity of sensors.

4. Robot cell according to one of the preceding claims, wherein the element (11, 12, 13) is provided with a data carrier and the robot cell (1) furthermore has reader (20) for reading the data carrier.

5. Robot cell according to Claim 4, wherein the reader (20) is installed on the robot (3).

6. Robot cell according to one of the preceding claims, wherein the element (11, 12, 13) is placed on a storage unit (10).

7. Robot cell according to Claim 6, wherein the robot cell (1) furthermore comprises an element changer (6) for changing an element (11, 12, 13) without moving a storage unit (10).

8. Robot cell according to one of the preceding claims, wherein the robot cell (1) futhermore has a cleaning device (18).

9. Combination of one or more industrial machines and a robot cell (1) according to one of the preceding claims.

10. Combination according to Claim 9, wherein the one or more industrial machines are CNC processing machines (2).

11. Method for changing and storing elements (11, 12, 13) with a unique property in a robot cell (1), which comprises a robot (3), around at least party of which a wall has been installed, which is provided with an interchange station (5) and which on the inside comprises a magazine section (4) with at least two locations, wherein the at least two locations in the magazine section (4) are each suitable for storing elements (11, 12, 13) with a different value for the unique property, the method comprising:
- placing an element (11, 12, 13) in the interchange station (5) of the robot cell (1);
- detecting the unique property of the element (11, 12, 13);
- storing the detected unique property in a first database (21);
- selecting a suitable location for the element (11, 12, 13) with the aid of a processor (23) on the basis of the unique property detected, which is stored in the first database (21), and data relating to whether or not locations in the magazine section (4) are occupied, as well as the suitability per location for storing an element with a specific value for the unique property, stored in a second database (22);
- placing the element (11, 12, 13) in the location in the magazine section (4) determined with the aid of the processor (23);
- storing the location provided with the element (11, 12, 13) as well as changes, caused by placement, in the suitability per location for storing an element with a specific value of the unique property in the second database (22), **characterised in that** detection is effected by means of measuring a height of the element (11, 12, 13) with the aid of a height measurement device (16).

12. Method according to Claim 11, wherein the element (11, 12, 13) is provided with a data carrier and detection is effected by means of reading the data carrier with the aid of a reader (20).

13. Method according to one of Claims 11-12, wherein if two or more locations are equally suitable the processor selects a lowest location.

14. Method according to one of Claims 11-13, wherein the element (11, 12, 13) is placed on a storage unit (10).

15. Method according to one of Claims 11-14, wherein the method comprises defragmentisation of the robot cell (1) with the aid of the processor (23) to create new locations.

## Patentansprüche

1. Roboterzelle (1) zum Austauschen und Lagern von Elementen mit spezifischen Merkmalen, wie beispielsweise von Werkzeugen (11) und/oder Produkten (13), mit
- einem Roboter (3), der geeignet ist Elemente (11, 12, 13) aufzunehmen und von außerhalb der Roboterzelle (1) nach innerhalb der Roboterzelle (1), und umgekehrt zu bewegen;
- einer Wand, die wenigstens teilweise um den Roboter (3) herum aufgebaut ist, die einen Übergabebereich (5) aufweist, der die Bewegung von Elementen (11, 12, 13), die ausgetauscht oder gelagert werden sollen, von außerhalb nach innerhalb und von innerhalb nach außerhalb der Roboterzelle (1) mittels des Roboters (3) ermöglicht;
- einem Lagerbereich (4) auf der Innenseite der Wand, der wenigstens zwei Plätze aufweist;
- einer Steuereinheit (24) zum Steuern des Roboters (3);
wobei jeder der mindestens zwei Plätze in dem Lagerbereich (4) zum Lagern von Elementen (11, 12, 13) mit einer unterschiedlichen Ausprägung des spezifischen Merkmals geeignet ist und die Roboterzelle (1) konfiguriert ist, einen geeigneten Platz in dem Lagerbereich (4) auszuwählen, wenn ein Element (11, 12, 13) mit spezifischen Merkmalen in dem Übergabebereich (5) platziert wird, **dadurch gekennzeichnet, dass** die Roboterzelle (1) zusätzlich ein Messgerät zum Messen des spezifischen Merkmals des platzierten Elementes (11, 12, 13) aufweist, und dass das Messgerät eine Höhen-Messeinrichtung (16) zum Messen der Höhe des platzierten Elementes (11, 12, 13) aufweist.

2. Roboterzelle nach Anspruch 1, wobei die Roboterzelle (1) einen Speicher für die Auswahl eines geeigneten Platzes in dem Lagerbereich (4) aufweist, wobei der Speicher eine erste und eine zweite Datenbank (21, 22) und einen ersten Prozessor (23) zur Ermittlung eines geeigneten Platzes für ein an dem Übergabebereich (5) platziertes Element (11, 12, 13) auf der Basis von Daten der ersten und zweiten Datenbank (21, 22) aufweist, wobei die erste Datenbank (21) Daten bezüglich des spezifischen Merkmals des platzierten Elementes (11, 12, 13) und die zweite Datenbank (22) Daten bezüglich der Plätze in dem Lagerbereich (4) enthält, ob diese besetzt oder unbesetzt sind, als auch der Eignung jedes Platzes zur Lagerung eines Elementes mit einer speziellen Ausprägung des spezifischen Merkmals.

3. Roboterzelle nach Anspruch 1 oder 2, wobei die Höhen-Messeinrichtung (16) aufweist:
- eine Anzahl von Lasern, die übereinander angeordnet sind, von denen jeder einen im wesentlichen horizontalen Laserstrahl (17) ausstrahlt;
- eine Anzahl von Sensoren, von denen jeder einem Laser zugeordnet ist, die den ausgestrahlten relevanten Laserstrahl (17) empfangen;
- einen zweiten Prozessor, der mit der Anzahl der Sensoren verbunden ist, um die Höhe des platzierten Elementes (11, 12, 13) auf der Basis von Signalen von der Anzahl der Sensoren zu bestimmen.

4. Roboterzelle nach einem der vorstehenden Ansprüche, wobei das Element (11, 12, 13) mit einem Datenträger ausgestattet ist und die Roboterzelle (1) weiterhin eine Leseeinrichtung (20) zum Lesen des Datenträgers aufweist.

5. Roboterzelle nach Anspruch 4, wobei die Leseeinrichtung (20) an dem Roboter (3) installiert ist.

6. Roboterzelle nach einem der vorstehenden Ansprüche, wobei das Element (11, 12, 13) auf einer Lagereinheit (10) angeordnet ist.

7. Roboterzelle nach Anspruch 6, wobei die Roboterzelle (1) ferner einen Elementwechsler (6) zum Austausch eines Elementes (11, 12, 13) aufweist, ohne eine Lagereinheit (10) zu bewegen.

8. Roboterzelle nach einem der vorstehenden Ansprüche, wobei die Roboterzelle (1) weiterhin eine Reinigungsvorrichtung (18) aufweist.

9. Kombination aus einer oder mehreren industriellen Maschinen und einer Roboterzelle (1) nach einem der vorangegangenen Ansprüche.

10. Kombination nach Anspruch 9, wobei die eine oder mehrere industriellen Maschinen CNC-Bearbeitungsmaschinen (2) sind.

11. Verfahren zum Austauschen und Lagern von Elementen (11, 12, 13) mit einem spezifischen Merkmal in einer Roboterzelle (1), die einen Roboter (3) aufweist, um den herum zumindest teilweise eine Wand errichtet ist, die mit einem Übergabebereich (5) versehen ist und die auf einer Innenseite einen Lagerbereich (4) mit mindestens zwei Plätzen aufweist, wobei die mindestens zwei Plätze in dem Lagerbereich (4) geeignet sind zum Lagern von Elementen (11, 12, 13) mit einer unterschiedlichen Ausprägung des spezifischen Merkmals, wobei das Verfahren umfasst:
- Platzieren eines Elementes (11, 12, 13) in dem Übergabebereich (5) der Roboterzelle (1);
- Ermitteln des spezifischen Merkmals des Elementes (11, 12, 13);
- Speichern des ermittel speziellen Merkmals in einer ersten Datenbank (21);
- Auswählen eines geeigneten Platzes für das Element (11, 12, 13) mit Hilfe eines Prozessors (23) auf der Basis des ermittelten spezifischen Merkmals, das in der ersten Datenbank (21) gespeichert ist, und von Daten, die sich darauf beziehen, ob die Plätze in dem Lagerbereich (4) besetzt oder nicht besetzt sind, sowie von der Eignung jedes Platzes zum Lagern eines Elementes mit einer speziellen Ausprägung des spezifischen Merkmals, das in der zweiten Datenbank (22) gespeichert ist;
- Platzieren des Elementes (11, 12, 13) an dem Platz in dem Lagerbereich (4) bestimmt mit Hilfe des Prozessors (23);
- Speichern des Platzes der mit dem Element (11, 12, 13) versehen ist sowie von durch die Platzierung verursachten Änderungen in der Eignung jedes Platzes zum Lagern eines Elementes mit der speziellen Ausprägung des spezifischen Merkmals in der zweiten Datenbank (22),
**dadurch gekennzeichnet, dass** die Ermittlung durch Messen einer Höhe des Elementes (11, 12, 13) mit Hilfe einer Höhen-Messeinrichtung (16) erfolgt.

12. Verfahren nach Anspruch 11, wobei das Element (11, 12, 13) mit einem Datenträger ausgestattet ist und die Ermittlung durch Lesen des Datenträgers mit Hilfe einer Leseeinrichtung (20) erfolgt.

13. Verfahren nach einem der vorstehenden Ansprüche 11 bis 12, wobei der Prozessor, wenn zwei oder mehr Plätze gleichermaßen geeignet sind, den niedrigsten Platz auswählt.

14. Verfahren nach einem der vorstehenden Ansprüche 11 bis 13, wobei das Element (11, 12, 13) auf einer Lagereinheit (10) platziert wird.

15. Verfahren nach einem der vorstehenden Ansprüche 11 bis 14, wobei das Verfahren zur Schaffung von neuen Plätzen eine Defragmentierung der Roboterzelle (1) mittels dem Prozessor (23) beinhaltet.

## Revendications

1. Cellule robotisée (1) pour modifier et stocker des éléments ayant une propriété unique, tels que des outils (11) et/ou des produits (13), comprenant :
- un robot (3) adapté pour collecter et déplacer des éléments (11, 12, 13) depuis l'extérieur de la cellule robotisée (1) vers l'intérieur de la cellule robotisée (1) et réciproquement ;
- une paroi, au moins partiellement installée autour du robot (3), qui contient une station d'échange (5) pour permettre le déplacement d'éléments (11, 12, 13) qui doivent être modifiés ou stockés de l'extérieur vers l'intérieur et de l'intérieur vers l'extérieur de la cellule robotisée (1) en utilisant le robot (3) ;
- une section de magasin (4) sur l'intérieur de la paroi, qui a au moins deux emplacements ;
- une unité de commande (24) pour commander le robot (3) ;
dans laquelle les au moins deux emplacements dans la section de magasin (4) sont chacun adaptés pour stocker des éléments (11, 12, 13) ayant une valeur différente de la propriété unique et la cellule robotisée (1) étant paramétrée pour sélectionner un emplacement adapté dans la section de magasin (4) lorsqu'un élément (11, 12, 13) ayant une propriété unique est placé dans la station d'échange (5), **caractérisée en ce que** la cellule robotisée (1) comprend en outre un dispositif de mesure pour mesurer la propriété unique de l'élément (11, 12, 13) placé, et **en ce que** le dispositif de mesure comprend un dispositif de mesure de hauteur (16) pour mesurer une hauteur de l'élément (11, 12, 13) placé.

2. Cellule robotisée selon la revendication 1, dans lequel la cellule robotisée (1) comprend une mémoire pour la sélection d'un emplacement adapté dans la section de magasin (4), ladite mémoire contenant une première et une deuxième base de données (21, 22), et un premier processeur (23) pour calculer un emplacement adapté pour un élément (11, 12, 13) placé dans la station d'échange (5) sur la base de données des première et deuxième bases de données (21, 22), où la première base de données (21) contient des données concernant la propriété unique de l'élément (11, 12, 13) placé et la deuxième base de données (22) contient des données indiquant si les emplacements dans la section de magasin (4) sont occupés ou non, ainsi que la conformité par emplacement pour stocker un élément avec une valeur spécifique pour la propriété unique.

3. Cellule robotisée selon la revendication 1 ou 2, dans laquelle le dispositif de mesure de hauteur (16) comprend :
- une pluralité de lasers positionnés les uns au-dessus des autres, dont chacun émet un faisceau laser pratiquement horizontal (17);
- une pluralité de capteurs, chaque capteur correspondant à un laser, qui reçoit le faisceau laser associé (17) émis;
- un deuxième processeur, qui est raccordé à la pluralité de capteurs, pour déterminer la hauteur de l'élément (11, 12, 13) placé sur la base de signaux provenant de la pluralité de capteurs.

4. Cellule robotisée selon une des revendications précédentes, dans laquelle l'élément (11, 12, 13) est pourvu d'un support de données et la cellule robotisée (1) comprend en outre un lecteur (20) pour lire le support de données.

5. Cellule robotisée selon la revendication 4 dans lequel le lecteur (20) est installé sur le robot (3).

6. Cellule robotisée selon une des revendications précédentes, dans laquelle l'élément (11, 12, 13) est placé sur une unité de stockage (10).

7. Cellule robotisée selon la revendication 6, dans laquelle la cellule robotisée (1) comprend en outre un échangeur d'élément (6) pour changer un élément (11, 12, 13) sans déplacer une unité de stockage (10).

8. Cellule robotisée selon une des revendications précédentes, dans laquelle la cellule robotisée (1) comprend en outre un dispositif de nettoyage (18).

9. Combinaison d'une ou plusieurs machines industrielles et d'une cellule robotisée (1) selon une des revendications précédentes.

10. Combinaison selon la revendication 9, dans laquelle les une ou plusieurs machines industrielles sont des machines de traitement CNC (2).

11. Procédé pour modifier et stocker des éléments (11, 12, 13) ayant une propriété unique dans une cellule robotisée (1), qui comprend un robot (3), autour d'au moins une partie duquel une paroi a été installée, qui est pourvu d'une station d'échange (5) et qui comprend à l'intérieur une section de magasin (4) avec au moins deux emplacements, dans lequel les au moins deux emplacements dans la section de magasin (4) sont chacun adaptés pour stocker des éléments (11, 12, 13) ayant une valeur différente pour la propriété unique, le procédé comprenant :
- le placement d'un élément (11, 12, 13) dans la station d'échange (5) de la cellule robotisée (1);
- la détection de la propriété unique de l'élément (11,12,13) ;
- le stockage de la propriété unique détectée dans une première base de données (21) ;
- la sélection d'un emplacement adapté pour l'élément (11, 12, 13) à l'aide d'un processeur (23) sur la base de la propriété unique détectée, qui est stockée dans la première base de données (21), et de données indiquant si les emplacements dans la section de magasin (4) sont occupés ou non, ainsi que la conformité par emplacement pour stocker un élément avec une valeur spécifique pour la propriété unique, stockée dans une deuxième base de données (22) ;
- le placement de l'élément (11, 12, 13) dans l'emplacement dans la section de magasin (4) déterminé à l'aide du processeur (23) ;
- le stockage de l'emplacement pourvu de l'élément (11, 12, 13) ainsi que des modifications, causées par le placement, de la conformité par emplacement pour stocker un élément avec une valeur spécifique de la propriété unique dans la deuxième base de données (22), **caractérisé en ce que** la détection est effectuée au moyen de la mesure d'une hauteur de l'élément (11, 12, 13) à l'aide d'un dispositif de mesure de hauteur (16).

12. Procédé selon la revendication 11, dans lequel l'élément (11, 12, 13) est pourvu d'un support de données et la détection est effectuée au moyen de la lecture du support de données à l'aide d'un lecteur (20).

13. Procédé selon une des revendications 11 à 12, dans lequel si deux emplacements ou plus sont adaptés également, le processeur sélectionne un emplacement le plus bas.

14. Procédé selon une des revendications 11 à 13, dans lequel l'élément (11, 12, 13) est placé sur une unité de stockage (10).

15. Procédé selon une des revendications 11 à 14, dans lequel le procédé comprend la défragmentation de la cellule robotisée (1) à l'aide du processeur (23) pour créer de nouveaux emplacements.
